(19) Europäisches Patentamt
European Patent Office
Office européen des brevets

(11) Publication number: **0 124 936**
**A1**

# (12) EUROPEAN PATENT APPLICATION

(21) Application number: 84200616.5

(22) Date of filing: 02.05.84

(51) Int. Cl.³: C 08 J 5/10
C 08 L 21/00, C 08 K 9/12

(30) Priority: 04.05.83 NL 8301570

(43) Date of publication of application: 14.11.84 Bulletin 84/46

(84) Designated Contracting States: AT DE FR GB IT LU NL

(71) Applicant: AKZO N.V.
Velperweg 76
NL-6824 BM Arnhem(NL)

(72) Inventor: van Ooij, Willy Johan
Adm. Helfrichlaan 75
NL-6952 GC Dieren(NL)

(74) Representative: Sieders, René et al,
P.O. Box 314
NL-6800 AH Arnhem(NL)

## (54) Rubber-to-metal adhesion promoting compositions and the use thereof.

(57) The present invention relates to new organic and inorganic rubber-to-metal adhesion promoting compositions an their use. The compositions comprise metal salts, such as salts of cobalt or nickel, applied to a powdered, adsorbing carrier, such as a zeolite or a silica. Preferred organic adhesion-promoting compositions comprise metal carboxylates having from 1 to 22 carbon atoms. Especially suitable inorganic compositions are obtained by heating metal metaborate/silica blends and/or metal orthoborate/silica blends resulting in metal polyborosilicates.

The present compositions display very good adhesion properties, hardly or do not affect rubber properties and effectively inhibit corrosion of the metal elements in the rubber.

EP 0 124 936 A1

# Rubber-to-metal adhesion-promoting compositions and the use thereof

The present invention relates to a method of bonding rubber to metal elements contained therein by vulcanizing, with the rubber containing an adhesion-promoting composition. A great many adhesion promoters have been proposed in the past.

One of the promoters used in actual practice is cobalt naphthenate recommended in German Patent Specification 895 371.

This substance as such can hardly be processed into a fine, loose powder.

It is therefore difficult to mix into rubber.

Further, U.S. Patent Specification 4 203 874 proposes as adhesion promoter a cobalt compound of the formula

$$(R-CO_2-Co-O)_3B,$$

wherein R represents an alkyl radical having 9-12 carbon atoms. This widely used adhesion promoter is commercially available under the trade name Manobond C (from Wyrough and Loser Inc., Trenton, N.J.). As Manobond C is a liquid, it also is difficult to mix into rubber. Moreover, commonly used adhesion promoters such as Manobond C and cobalt naphthenate dissolve in the rubber, as a result of which the vulcanization and the aging properties of the rubber are adversely affected.

The present invention does not show these drawbacks and relates to a method of the type indicated above, with the rubber containing a composition promoting the adhesion to the metal elements, said composition comprising a metal applied to a powdered, adsorbing carrier which does not dissolve in rubber and is physically and chemically stable at the vulcanization temperature of the rubber.

The compositions display adhesion results that are not so much equivalent as superior to those obtained with the usual promoters. Moreover, the compositions to be prepared can readily be varied to suit them to the end use envisaged; their effect on the rubber vulcanization rate is practically nil and they reduce the influence on adhesion of water contained in rubber. Furthermore, the compositions effectively inhibit corrosion of the metal elements.

The carrier material should be in the form of a powder, be capable of adsorbing, be insoluble in rubber, be physically and chemically stable at the vulcanization temperature (generally 150°-180°C) and release the metals applied to it only gradually. If the carrier material should melt or decompose during vulcanization, a high proportion of the metals applied would be released at the same time. The resulting accelerated aging and loss of long lasting effectiveness would have a negative effect on the rubber properties. Suitable carrier materials are silica, alumina, silica-alumina, zirconia, zeolites, talc, kaolin, diatonite, carbon black, chalk, gypsum and porous polymers that are stable at vulcanization temperature. It is preferred that use should be made of a zeolite or silica.

As a zeolite there is preferably used a crystalline alumino silicate, more particularly one of the type A, X or Y. The metal is generally included in the zeolite by ion exchange. Of course, also part of the metal compound used for the ion exchange may be left in the pores of the zeolite. As a rule, the zeolite contains 0,5-50% by weight, more particularly 5-30% by weight of the metal, calculated on the total composition.

The silica to be used as carrier material generally has a specific surface area of 10-800 $m^2$/g, preferably 50-250 $m^2$/g (measured by the BET method with nitrogen) and a pore volume of 0,1-3,0 ml/g, preferably 0,5-2,5 ml/g (measured by the water adsorption method). Although the silica may be present in the composition in the dried form, it has been found that the use of silica containing 40% by weight, and preferably 3-10% by weight of water, leads to very good results.

The metal may be applied to the carrier in a simple way, for instance by impregnating or by spraying. Generally, the silica contains 0,5-30% by weight, preferably 1-15% by weight of the metal, calculated on the total composition. For the composition to be properly mixed into the rubber it must be in the form of a fine, non- or hardly dusting powder.
The particles should generally be sm ll er than 200 μm. It is preferred that the particle size should be in h range of 1 to 50 μm, more particularly 5 to 25 μ m.

Examples of suitable adhesion-promoting metals include cobalt, nickel, zinc, lead and tin. Preference is given to the use of cobalt or nickel. The metals may be applied in the form of inorganic or organic compounds. As examples of suitable inorganic compounds may be mentioned metal salts, such as metal sulphates, metal phosphates, metal nitrates, metal nitrites, metal chromates, metal orthoborates, metal metaborates and metal sulphonates. It is preferred that use should be made of those salts of which also the anion plays an active corrosion inhibiting role, such as nitrites, chromates and metaborates. Of course, also mixtures of these salts may be applied.
The usefulness of the sulphates and nitrates is surprising particularly in that these inorganic salts as such do not act as adhesion promoters (see Rubber Chem. Technol. 32 (1979) [605-675]).
Suitable organic compounds are metal carboxylates in which the carboxylate group has in the range of from 1 to 22 carbon atoms, such as formiates, acetates, propionates, naphthenates, stearates, resinates, abietates, 2-hexyl hexanoates, octanoates, versinates, cekanoates or mixtures thereof. Very suitable are mixtures containing 6 to 10 carbon atoms, in particular cobalt cekanoate, nickel cekanoate or mixtures thereof. The organic anions, too, play an active role in inhibiting corrosion.

A particularly suitable organic composition according to the invention comprises cobalt cekanoate or nickel cekanoate applied to a silica carrier having a specific surface area of 50-250 $m^2/g$, a pore volume of 0,5-2,5 ml/g, and a water content of 3-10% by weight, calculated on the silica. The metal content of the composition is generally up to 0,5-30%, preferably 2-10% by weight.

A particularly suitable inorganic composition according to the invention can be prepared by applying cobalt or nickel metaborate and/or cobalt or nickel orthoborate to a silica carrier and heating the blend to form a polyborosilicate. The metal content of these polyborosilicates is generally 0,5-30%, preferably 10-15% by weight.

The present compositions prepared can be widely varied with the end use

envisaged. In the case of the non-zeolitic carrier materials the metal compounds can be applied by impregnating or spraying. If the metal compound is solid, it will first have to be dissolved. The solvent is of course dependent on the type of metal compounds. For an inorganic compound, for instance, water will be the most preferred solvent. For organic compounds use may be made of, for example, white spirit, oxytol and butyl carbitol.
After the metal compound has been applied, the solvent may be removed by heating. In the case of the organic compositions according to the invention there is often no need for that. However, for the preparation of the inorganic compositions according to the invention, it is usually necessary for the carrier provided with the metal compound to be heated to a temperature of 100°-800°C, preferably 100°-200°C, for a sufficiently long period to remove the solvent (usually 0,1 to 24 hours).

For instance, cobalt or nickel metaborate and/or cobalt or nickel orthoborate may be dissolved in water (being slightly acidic). The adhesion-promoting composition may be prepared by contacting a silica carrier with said solution and removing the water by heating the blend during 0,1-24 hours, preferably 6-20 hours, at a temperature of 100°-800°C, preferably 100°-200°C, whereby due to a polycondensation reaction a polyborosilicate is formed. Contacting can be effected by spraying the solution onto the silica or by impregnating the latter with this solution.
Alternatively, this composition may be prepared by adding such amounts of a highly soluble metaborate salt, e.g. sodium metaborate, and a highly soluble cobalt or nickel salt, e.g. cobalt or nickel sulphate, to an aqueous slurry of a silica carrier as will cause cobalt or nickel metaborate to precipitate directly onto the silica, followed by isolating the metaborate/silica blend and heating it to remove the water and to convert the blend into a polyborosilicate. Cobalt or nickel orthoborate may likewise be precipitated onto a silica carrier by adding appropriate amounts of a highly soluble cobalt or nickel salt, e.g. cobalt or nickel sulphate, and boric acid to an aqueous alkaline slurry of the silica carrier. After isolating and heating the orthoborate/silica blend a polyborosilicate results.
If water has been used as a solvent, the water content should generally

be reduced to 40% by weight or less and preferably to up to 10% by weight calculated on the silica.

It has been found that with the present invention only part of the metal is used up during vulcanizing. As a result, the promoter still has a favourable effect on rubber-to-metal adhesion during aging of the final shaped product. This is in contrast to rubber soluble adhesion promoters such as Manobond C, which during vulcanization is completely converted into compounds that do not contribute to adhesion, or corrosion protection.

Moreover, the properties of the present composition may be optimized in a simple manner for any rubber formulation by adapting the metal content, the water content, the choice of the metal compound and the type of carrier material.

The present composition serves to promote the rubber-to-steel adhesion, more particularly the adhesion of rubber to brass or zinc plated steel cord. Reinforced rubber compositions are used in the manufacture of a great many products, such as automobile tyres, conveyor belts and hose.

The rubber to be used must be vulcanizable with sulphur. Examples of suitable rubbers include natural rubber, synthetic rubbers such as polybutadiene, EPDM, copolymers of butadiene and styrene, polyisoprene and mixtures thereof.
The present composition may be mixed into the rubber in an amount of 0,1-50 parts, preferably 0,5-10, and more particularly 1-5 parts per 100 parts of rubber.
In the rubber there may, of course, also be incorporated other components. For further particulars reference is made to US Patent Specification 4 203 874.

The following examples serve to illustrate the invention.

Examples 1 to 8

Preparation of adhesion improving compositions

1. $CoSO_4$ on silica (Promoter I)

281 g of $CoSO_4.7H_2O$ were dissolved in 1 litre of demineralized water. Into a Lödiger mixer there were charged 596 g of silica. This silica was of the KS 300 type marketed by Akzo Chemie and had a specific surface area of 130 $m^2/g$, a pore volume of 1,0 ml/g. Only 0,2% of the particles was greater than 40 µm; the average particle size was about 20 µm. Subsequently, 886,8 g of the $CoSO_4$ solution were sprayed onto the silica. After homogenization the composition was dried for 16 hours at 105°C.

The cobalt content of the composition was 7,8% by weight, its water content 5% by weight.

2. $Co(NO_3)_2$ on zeolite of the A type (Promoter II)

3200 g of $Co(NO_3)_2.6H_2O$ were added to 2000 g of a zeolite of the Na A type.

The pore diameter was 4 Ångstroms, the average particle size 5 µm.

The mixture was made up to 10 litres with water. Sodium ions were exchanged for cobalt ions with stirring for 3 hours at 70°C. Subsequently, the zeolite was filtered, washed with water and again subjected to an exchanging treatment as indicated above. After filtration and washing the zeolite was dried for 24 hours at 105°C. The cobalt content of the composition was 26% by weight, its water content 1%.

3. $Ni(NO_3)_2$ on zeolite of the A type (Promoter III)

The preparation was carried out in the manner indicated under 2, with the exception that instead of 3200 g of $Co(NO_3)_2.6H_2O$ 3200 g of $Ni(NO_3)_2.6H_2O$ were added to 2000 g of the Na A type.

The nickel content of the resulting composition was 24% by weight, its water content 1%.

4. Co naphthenate/resinate on silica (Promoter IV)

A mixture of 70% by weight of cobalt naphthenate, 23% by weight of

cobalt resinate and 7% by weight of cobalt acetate was prepared as described in Example I of US 4 340 515. Of this mixture 100 g were dissolved in 200 g of butyl carbitol.

After 240 g of silica of the KS 300 type (from Akzo Chemie) had been charged into a Lödiger mixer, the above-mentioned solution was added to it with stirring. Subsequently, the mixture was homogenized for 10 minutes. The composition contained 1,94% by weight of cobalt and 1% by weight of water.

5. Cobalt polyborosilicate (Promoter V)

500 ml of an aqueous solution containing 7,75 g of $CoSO_4$ were added dropwise to a vigorously stirred mixture of 500 ml of water containing 6,6 g of $NaBO_2$ and 16,7 g of silica (KS 300 ex Akzo Chemie) over a period of 20 min. and at a temperature of 60°C. The resulting slurry, which was kept at 60°C, was stirred for 30 minutes and filtered. The filter cake was washed twice with 500 ml of water (pH 7) and finally dried for 24 hrs at 180°C. During this drying stage the initially formed cobalt metaborate/silica blend was quantitatively converted into cobalt polyborosilicate.

The cobalt content of the composition was 15% by weight, its water content 2% by weight.

6. Nickel polyborosilicate (Promoter VI)

This preparation was carried out as described in Example 5, except that instead of 7,75 g of $CoSO_4$ there were added 7,75 g of $NiSO_4$.

The nickel content of the composition was 15% by weight, its water content 2 % by weight.

7. Cobalt cekanoate on silica (Promoter VII)

294 g of cekanoic acid (acid number 381,5) and 228,4 g of white spirit were charged to a reactor and heated to 80°-90°C, with stirring. After portionwise addition of 249,9 g of cobalt acetate.$4H_2O$ (23,58% Co) to this stirred mixture the reactor was closed and purged with nitrogen. The temperature was raised to about 105°C, while passing a continuous stream of nitrogen through the reaction mixture to avoid foaming. Subsequently, water, acetic acid and white

spirit were distilled off. The white spirit that had separated was returned to the reaction mixture. The reaction temperature was gradually increased to 160°C with refluxing. When no longer any reflux was observed, the reactor was slowly evacuated up to renewed refluxing to remove last traces of acetic acid. When there was no longer any separation of acetic acid, the vacuum was released, the reaction mixture cooled to 80°C and discharged, resulting in 631 g of a reaction product consisting of cobalt cekanoate and white spirit.

551,3 g of the obtained reaction product were mixed with 448,7 g of silica (Silica KS 300 ex Akzo Chemie) and the mixture was homogenized with a dissolver. The metal content of the resulting composition was 5,0%, its water content 3% by weight.

8. Nickel cekanoate on silica (Promoter VIII)

The preparation of nickel cekanoate was carried out in the same way as described in Example 7, except that instead of 249,9 g cobalt acetate there were used 249,0 g of nickel acetate.$4H_2O$ (23,58% Ni). The amount of reaction product, consisting of nickel cekanoate and white spirit, was 616 g.

543,5 g of this reaction product were applied to 456,5 g of silica using the procedure described in the last part of Example 7. The metal content of the resulting composition was 5,0%, its water content 3% by weight.

Example 9

Use in rubber mixture

The adhesion-promoting compositions were added to a rubber formulation made up as follows:

| | | | |
|---|---|---|---|
| - | natural rubber | 100 | parts |
| - | carbon black (LS HAF type) | 55 | parts |
| - | Zn O | 10 | parts |
| - | stearic acid | 2 | parts |
| - | N-(1,3-dimethyl butyl) N'-phenyl-p-phenylene diamine (antioxidant) | 2 | parts |

| | | |
|---|---|---|
| - process oil | 5 | parts |
| - sulphur | 4 | parts |
| - morpholino thio benzothiazole sulphenamide (accelerator) | 0,8 | parts |

In each case the adhesion-promoting composition had been added in an amount such that expressed in metal content the rubber compound contained 0,16 parts by weight, calculated on 100 parts by weight of rubber. The rubber formulation and the adhesion-promoting composition were mixed at 70°C.

For comparison compounds were prepared containing no adhesion-promoting composition (control) and compounds containing Manobond C. Manobond C has a Co-content of 16 wt.%.

The rubber compounds were reinforced with brass plated steel cord (from Enka), type 4 x 0,25 mm, with 68,4% Cu and 4,5 g/kg brass plating weight. The length of embedment was 10 mm. The compounds were vulcanized at 150°C for the optimum vulcanization time determined with a Monsanto rheometer (= $t_{c90}$).

The $t_{c90}$ is the time in minutes required to attain 90% of the maximum modulus.

The adhesion of rubber to steel cord was measured in conformity with ASTM D 2229-73 specifications. Of series of 24 pulls each the pull-out forces were averaged. Of the cords pulled out also the rubber coverage was determined.

The adhesion of the rubber to the steel cord was determined in 3 different ways:

- immediately after vulcanization [test A];
- after vulcanization followed by aging for 8 hours at 120°C in saturated steam [test B];
- after vulcanization following 14 days' storage of the unvulcanized embedded cords at 40°C and 98% relative humidity (green aging) [test C].

The results are listed in the table below

| Promoter | $t_{c90}$ (in min) | adhesion | | | | | |
|---|---|---|---|---|---|---|---|
| | | test A | | test B | | test C | |
| | | pull-out force (N/10 mm) | rubber cover-age (%) | pull-out force (N/10 mm) | rubber cover-age (%) | pull-out force (N/10 mm) | rubber cover-age (%) |
| control | 11,6 | 290 | 50 | 220 | 0 | 155 | 20 |
| Manobond C | 9,2 | 390 | 70 | 320 | 30 | 175 | 20 |
| I | 10,8 | 395 | 70 | 260 | 30 | 170 | 30 |
| II | 11,8 | 360 | 80 | 300 | 50 | 220 | 40 |
| III | 11,9 | 360 | 80 | 320 | 40 | 210 | 40 |
| VII | 11,2 | 445 | 90 | 360 | 50 | 275 | 60 |

The above results show that the present organic compositions affect the rubber properties to a lesser degree than Manobond C (cf. $t_{c90}$) and display equivalent or even better adhesion results. Moreover, the present compositions can be mixed into rubber at 70°C more satisfactorily than Manobond C.

Example 10

Use in rubber mixture

Promoters V and VI were subjected to the tests A and B described in Example 9. The adhesion tests also comprised compounds containing 0,32 parts of metal per 100 parts of rubber. The results are listed in the table below.

| Promoter | rheometer | adhesion | | | | | | | |
|---|---|---|---|---|---|---|---|---|---|
| | | test A | | | | test B | | | |
| | | 0,16 parts of metal | | 0,32 parts of metal | | 0,16 parts of metal | | 0,32 parts of metal | |
| | $t_{c90}$ (min) | pull out force (N/10mm) | rubber-cover-age (%) | pull out force (N/10mm) | rubber cover-age (%) | pull out force (N/10mm) | rubber cover-age (%) | pull out force (N/10mm) | rubber cover-age (%) |
| control | 11,5 | 390 | 90 | 370 | 70 | 300 | 30 | 270 | 30 |
| Manobond C | 9,0 | 440 | 100 | 380 | 70 | 290 | 40 | 240 | 20 |
| V | 11,5 | 400 | 90 | 415 | 90 | 350 | 70 | 360 | 80 |
| VI | 11,5 | 400 | 90 | 410 | 90 | 340 | 60 | 360 | 70 |

Promoter V was also tested for improvement of the rubber-to-steel adhesion after vulcanization followed by immersion in a 5 wt.% NaCl solution in water at 90°C for 72 hrs [test D]. For these tests the rubber compounds were reinforced with cord of the 4 x 0,25 mm type containing 68% Cu and 3,5 g/kg plating weight, which is a well-known steel cord displaying maximum possible inherent corrosion resistance. Addition levels of 0,16 and 0,80 parts of metal per 100 parts of rubber were used. The results are listed in the table below.

| Promoter | adhesion | | | | | |
|---|---|---|---|---|---|---|
| | test A | | test B (24 hrs, 120°C) | | test D | |
| | pull out force (N/10 mm) | rubber cover-age (%) | pull out force (N/10 mm) | rubber cover-age (%) | pull out force (N/10 mm) | rubber cover-age (%) |
| control | 280 | 90 | 280 | 30 | 95 | 10 |
| Manobond C (0,16 parts Co) | 400 | 100 | 270 | 10 | 90 | 20 |
| Manobond C (0,80 parts Co) | 355 | 70 | 110 | 0 | 80 | 0 |
| V (0,16 parts Co) | 300 | 70 | 315 | 60 | 85 | 0 |
| V (0,80 parts Co) | 350 | 90 | 300 | 60 | 210 | 50 |

From the results in the tables of this Example it can be observed that unlike Manobond C the present inorganic compositions do not affect the rubber properties (cf. $t_{c90}$). Moreover they result in a marked improvement both of steam aged adhesion and adhesion following corrosion in salt solutions. The present compositions become increasingly effective with increasing level of addition of up to a level of 0,80 parts of metal per 100 parts of rubber. At high levels even initial adhesion is found to improve (cf. test A). This is indicative of the occurrence of corrosive side effects even in the early stage of bonding.

CLAIMS

1. A method of bonding rubber to metal elements contained therein by vulcanizing, with the rubber containing a composition promoting the adhesion to the metal elements, said composition comprising a metal applied to a powdered adsorbing carrier, which carrier does not dissolve in rubber and is physically and chemically stable at the vulcanization temperature of the rubber.

2. A method according to claim 1, characterized in that the carrier consists of a zeolite.

3. A method according to claim 2, characterized in that the metal consists of cobalt ions or nickel ions.

4. A method according to claim 2 or 3, characterized in that the metal is used in an amount of 0,5 to 50 per cent by weight, calculated on the adhesion-promoting composition.

5. A method according to claim 1, characterized in that the carrier consists of silica.

6. A method according to claim 5, characterized in that the silica has a specific surface area of 50-250 $m^2/g$, a pore volume of 0,5-2,5 ml/g and a water content of up to 3-10% by weight, calculated on the silica.

7. A method according to claim 5 or 6, characterized in that the metal is cobalt or nickel.

8. A method according to claim 7, characterized in that the adhesion-promoting composition comprises a cobalt or nickel carboxylate having in the range of from 1 to 22 carbon atoms applied to the silica carrier.

9. A method according to claim 7, characterized in that the adhesion-promoting composition is obtained by applying cobalt or nickel metaborate and/or cobalt or nickel orthoborate to the silica carrier and heating

the resulting blend, to from a polyborosilicate.

10. A composition comprising a cobalt or nickel carboxylate having in the range of from 1 to 22 carbon atoms applied to a silica carrier.

11. A composition obtainable by applying cobalt or nickel metaborate and/or cobalt or nickel orthoborate to a silica carrier and heating the resulting blend to form a polyborosilicate.

12. Shaped objects entirely or partly consisting of vulcanized reinforced rubber obtained by the method of any one of the claims 1 to 9.

European Patent Office

**0124936**

# EUROPEAN SEARCH REPORT

Application number

EP 84 20 0616

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 292 111 (R.S. BEZWADA) * Claims 1,2,14-17; column 1, lines 35-42; column 4, lines 4-22; examples 13-28 * --- | 1,12 | C 08 J 5/10<br>C 08 L 21/00<br>C 08 K 9/12 |
| Y | GB-A-1 122 528 (PIRELLI SOCIETA PER AZIONI) * Claims; page 1, lines 62-81; page 2, lines 15-29, 51-78; example * --- | 1,3-8, 10,12 | |
| A | US-A-4 340 515 (K.H. FRASSEK et al.) * Claims; column 1, lines 59-64 * --- | 1,3,7 | |
| A | EP-A-0 026 294 (FIRESTONE TIRE & RUBBER CO.) * Claims 1,2 * --- | 3,7 | TECHNICAL FIELDS SEARCHED (Int. Cl. 3) |
| A | GB-A-1 338 930 (BRIDGESTONE TIRE COMPANY) * Claims; page 1, lines 66-72; example 1; table I,8 * --- | 9,11 | C 08 J<br>C 08 L<br>B 29 H<br>C 08 K |
| A | FR-A-1 253 708 (UNION CARBIDE) * Abstract 3a; page 3, right-hand column, lines 49-52 * ----- | 1,2 | |

The present search report has been drawn up for all claims

| Place of search | Date of completion of the search | Examiner |
|---|---|---|
| THE HAGUE | 20-08-1984 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82